Europäisches Patentamt

European Patent Office

Office européen des brevets

(11) Veröffentlichungsnummer: **0 329 690**
**B1**

(12) **EUROPÄISCHE PATENTSCHRIFT**

(45) Veröffentlichungstag der Patentschrift: **16.01.91**

(51) Int. Cl.⁵: **B 01 D 53/08**, B 01 J 8/12

(21) Anmeldenummer: **87907316.1**

(22) Anmeldetag: **28.10.87**

(86) Internationale Anmeldenummer:
**PCT/EP87/00639**

(87) Internationale Veröffentlichungsnummer:
**WO 88/03434 19.05.88 Gazette 88/11**

(54) **WANDERSCHICHTREAKTOR ZUR ENTFERNUNG VON UNERWÜNSCHTEN, GASFÖRMIGEN BESTANDTEILEN AUS GASEN.**

(30) Priorität: **12.11.86 DE 3638611**

(43) Veröffentlichungstag der Anmeldung:
**30.08.89 Patentblatt 89/35**

(45) Bekanntmachung des Hinweises auf die Patenterteilung:
**16.01.91 Patentblatt 91/03**

(84) Benannte Vertragsstaaten:
**BE DE FR GB IT NL**

(56) Entgegenhaltungen:
**GB-A-1 402 543**

(73) Patentinhaber: **Bergwerksverband GmbH**
**Franz-Fischer-Weg 61**
**D-4300 Essen 13 (DE)**

(72) Erfinder: **BRÜGGENDICK, Hermann**
**Dorstener Str. 32**
**D-4224 Hünxe (DE)**
Erfinder: **WEBER, Raimond**
**Ardeystr. 238a**
**D-5810 Witten (DE)**
Erfinder: **RICHTER, Ekkehard**
**Schmachtenbergstr. 89**
**D-4300 Essen-Kettwig (DE)**
Erfinder: **KNOPPIK, Berthold**
**Grävenweg 7**
**D-4300 Essen 11 (DE)**

Courier Press, Leamington Spa, England.

**Beschreibung**

Die Erfindung betrifft einen Wanderschichtreaktor zur Entfernung von unerwünschten, gasförmigen Bestandteilen aus Gasen gemäß dem Oberbegriff des Anspruches 1.

Es ist bekannt, Gase mit quer durchströmten Wanderschichtreaktoren zu reinigen. So wird in der DE—A—29 11 712 ein Verfahren zur Entfernung von Schwefeloxiden und Stickstoffoxiden aus Abgasen offenbart, bei dem die Abgase quer durch einen Reaktor mit einer von oben nach unten wandernden Schicht aus körnigem, kohlenstoffhaltigem Adsorptionsmittel geführt werden. Dabei wird das Adsorptionsmittel über einen Verteilungsraum, der keine Jalousien aufweist, am Kopf des Reaktors der durchströmten Wanderschicht zugeführt, die seitlich durch Jalousien durch die das Abgas ein- bzw. austritt, begrenzt ist. Das Adsorptionsmittel wandert langsam nach unten in einen Abzugsraum, der ebenfalls nicht durch Jalousien begrenzt ist. Die als Kegel ausgebildeten Räume, die mit Adsorptionsmittel gefüllt sind, werden nicht vom Abgas durchströmt. Je kompakter der Adsorber gebaut wird, d.h. je größer das Verhältnis Bettiefe zu Betthöhe ist, desto größer wird das Verhältnis des nicht durchströmten Raumes zum aktiven Adsorbervolumen.

Der Erfindung liegt die Aufgabe zugrunde, Strömungstoträume insbesondere am Fuß und am Kopf eines Wanderschichteaktors zu vermeiden.

Die Aufgabe wird erfindungsgemäß durch den kennzeichnenden Teil des Anspruches 1 gelöst.

Die Weiterbildungen der Erfindung erfolgen durch die Merkmale der Unteransprüche.

Durch den erfindungsgemäßen Wanderschichtreaktor wird der Verteilungs- und Abzugsraum in das Reaktorvolumen integriert. Es gibt keine Strömungstoträume im Zu- und Abfuhrbereich. Dadurch kann das Reaktorvolumen gegenüber dem Stand der Technik wesentlich reduziert werden. Da die gesamte Wanderschicht gleichmäßig durchströmt wird, kann bei exothermen Reaktionen die freigesetzte Wärme überall abgeführt werden. Es kommt somit an keiner Stelle der Wanderschicht zu unerwünschten Temperaturerhöhungen.

Auf einer Seite des Verteilungsraumes ist eine Gas- und Adsorptionsmittel-Führung angeordnet, die Verwirbelungen und damit verbundene Randgängigkeiten in diesem Bereich verhindert.

In einer bevorzugten Ausführungsform liegen die Jalousien im Bereich des Verteilungsraumes auf einem Kreisbogen mit einem Radius, der der Bettiefe entspricht. Dadurch sind im gesamten Bereich des Verteilungsraumes gleiche Strömungswege für das Gas vorhanden.

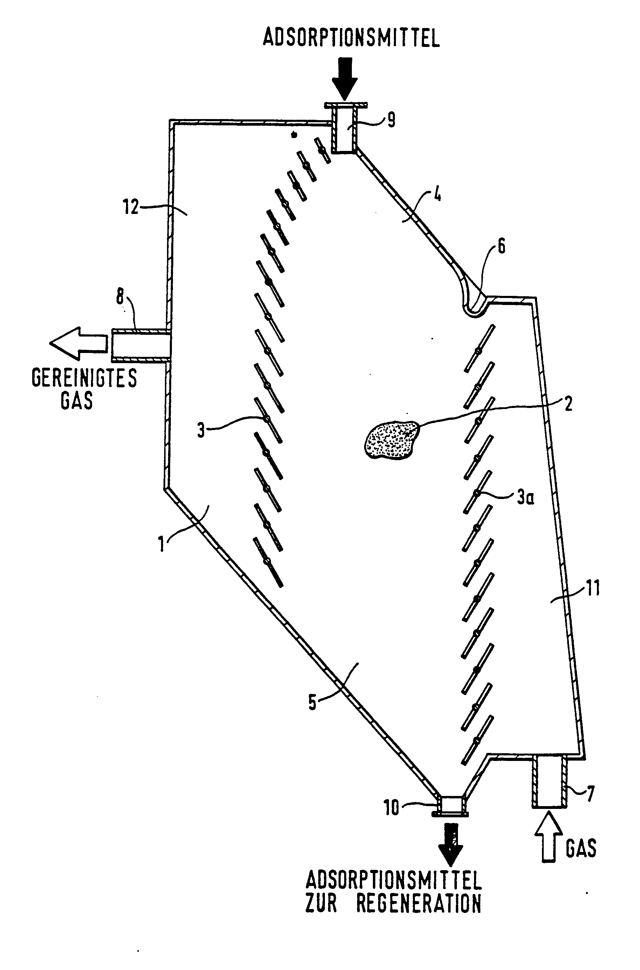

Die Erfindung wird nachfolgend anhand der Zeichnung näher beschrieben.

Die einzige Figur zeigt in schematischer Darstellung eine Ausführungsform des erfindungsgemäßen Wanderschichtreaktors.

Aus der Figur geht hervor, daß in einem Wanderschichtreaktor 1 eine Wanderschicht 2 aus Adsorptionsmittel gebildet wird, die durch Jalousien 3, 3a geführt wird. Das Adsorptionsmittel wird durch eine Adsorptionsmittelaufgabe 9 einem Verteilungsraum 4 aufgegeben. Es wandert durch den Reaktor in einen Abzugsraum 5 und wird über einen Adsorptionsmittelaustrag 10 abgezogen. Ein Gas wird über eine Leitung 7 in den Gasraum 11 geführt und strömt quer zur Wanderschicht 2 durch das Adsorptionsmittel und verläßt den Wanderschichtreaktor 1 durch den Gasraum 12 über eine Leitung 8. Durch die Jalousien 3, 3a im Bereich des Verteilungsraumes 4 und des Abzugsraumes 5 werden diese Räume ebenfalls von dem Gas durchströmt. Durch eine Gas- und Adsorptionsmittelführung 6 können Verwirbelungen und damit verbundene Randgängigkeiten des Gases im Bereich des Verteilungsraumes 4 vermieden werden. Die Jalousien 3 im Bereich des Verteilungsraumes 4 liegen auf einem Kreisbogen mit einem Radius, der der Bettiefe entspricht.

*Vergleichsbeispiel*

Ein Wanderschichtreaktor gemäß dem Stand der Technik hat folgende Abmessungen:

| | |
|---|---|
| Höhe der Wanderschicht | 7,50 m |
| Höhe des Verteilungsraumes | 1,35 m |
| Höhe des Abzugsraumes | 1,35 m |
| Gesamthöhe | 10,20 m |
| Bettiefe | 2,00 m |
| Bettbreite | 2,00 m |

Daraus ergeben sich folgende Volumina:

| | |
|---|---|
| Wanderschicht | 30,0 m³ |
| Verteilungs- und Abzugsraum | 3,6 m³ |
| Gesamtvolumen | 33,6 m³ |

Der Wanderschichtreaktor hat somit ein effektives Reaktorvolumen von 30,0 m³. 3,6 m³ Adsorptionsmittel befinden sich im Bereich der Strömungstoträume.

*Ausführungsbeispiel*

Wenn mit dem erfindungsgemäßen Wanderschichtreaktor das gleiche, effektive Reaktorvolumen von 30 m³ bereitgestellt werden soll, ergeben sich folgende verringerte Abmessungen:

| | |
|---|---|
| Höhe der Wanderschicht | 6,60 m |
| Gesamthöhe | 9,30 m |

D.h., das Volumen bzw. die Bauhöhe des erfindungsgemäßen Wanderschichtreaktors kann um ca. 10% verringert werden, wenn der gleiche Umsatz bzw. Abscheidegrad erreicht werden soll.

**Patentansprüche**

1. Wanderschichtreaktor (1) zur Entfernung von unerwünschten, gasförmigen Bestandteilen aus Gasen, in dem die Gase quer durch eine von oben nach unten wandernde Schicht (2) aus körnigen Adsorptionsmitteln geführt werden, und der Reaktor zur Adsorptionsmitteleintrag- und zur Adsorptionsmittelaustragsstelle hin verengt ausgebildet ist, so daß ein Verteilungsraum (4) und ein Abzugsraum (5) für das körnige Adsorptionsmittel gebildet werden, und die Wanderschicht (2) außerhalb des Verteilungs- und des Abzugsraumes durch Jalousien (3, 3a) von den Gasräumen getrennt ist, dadurch gekennzeichnet, daß zusätzlich der Verteilungsraum (4) auf der einen und der Abzugsraum (5) auf der gegenüberliegenden Seite mit Jalousien (3, 3a) versehen sind und sich die Gasräume (11, 12) auf den Seiten auf denen die Jalousien angeordnet sind bis in den Verteilungsraum (4) und in den Abzugsraum (5) hinein erstrecken.

2. Wanderschichtreaktor nach Anspruch 1, dadurch gekennzeichnet, daß an einer Seite des Verteilungsraumes (4) eine Gas- und Adsorptionsmittel-Führung (6) angeordnet ist.

3. Wanderschichtreaktor nach Anspruch 1 oder 2, dadurch gekennzeichnet, daß die Jalousien (3) im Bereich des Verteilungsraumes (4) auf einem Kreisbogen mit einem Radius, der der Betttiefe entspricht, angeordnet sind.

**Revendications**

1. Réacteur à couche mobile (1) pour l'élimination de composants gazeux indésirables de gaz, conformément auquel on conduit les gaz transversalement à travers une couche (2) qui se déplace du haut vers le bas et constituée d'agents d'adsorption granulaires, et le réacteur est construit de façon rétrécie aux endroits d'entrée des agents d'adsorption et de sortie des agents d'adsorption, en sorte que sont formés un volume ou espace de répartition ou division (4) et un espace ou volume d'évacuation (5) pour l'agent d'adsorption granulaire et la couche mobile (2) est séparée à l'extérieur de l'espace ou volume de répartition ou division et de l'espace ou volume d'évacuation par des jalousies (3, 3a) des espaces ou volumes réservés au gaz, caractérisé en ce que l'espace ou volume de division ou répartition (4) est pourvu complémentairement d'un côté et l'espace ou volume d'évacuation (5) est complémentairement pourvu, du côté opposé, de jalousies (3, 3a) et les espaces ou volumes réservés au gaz (11, 12) s'étendent des côtés sur lesquels les jalousies sont agencées jusque dans l'espace ou volume de répartition ou de division (4) et l'espace ou volume d'évacuation (5).

2. Réacteur à couche mobile suivant la revendication 1, caractérisé en ce qu'un guide (6) pour le gaz et l'agent d'adsorption est agencé d'un côté de l'espace ou volume de répartition ou division (4).

3. Réacteur à couche mobile suivant la revendication 1 ou 2, caractérisé en ce que les jalousies (3) sont agencées dans la zone de l'espace ou volume de division ou de répartition (4) sur un arc de cercle qui possède un rayon correspondant à la profondeur du lit.

**Claims**

1. Moving bed reactor (1) for the removal of undesirable gaseous components from gases, in which the gases are led transversely through a bed (2) which moves downwards from above and which consists of granular adsorption agents, and the reactor is constructed with a constriction towards the adsorption agent input place and towards the adsorption agent output place, so that, for the granular adsorption agent, a

## EP 0 329 690 B1

distribution chamber (4) and a discharge chamber (5) are formed, and the moving bed (2), outside the distribution chamber and the discharge chamber, is separated from the gas chambers by means of louvres (3, 3a), characterised in that the distribution chamber (4) on the one side, and the discharge chamber (5) on the opposite side, are provided additionally with louvres (3, 3a), and the gas chambers (11, 12), on the sides on which the louvres are arranged, extend inwardly as far as into the distribution chamber (4) and into the discharge chamber (5).

2. Moving bed reactor according to claim 1, characterised in that on one side of the distribution chamber (4) there is arranged a guide means (6) for the gas and for the adsorption agent.

3. Moving bed reactor according to claim 1 or 2, characterised in that the louvres (3) in the region of the distribution chamber (4) are arranged on a circular arc with a radius which corresponds to the depth of the bed.

4

ADSORPTIONSMITTEL

GEREINIGTES
GAS

GAS

ADSORPTIONSMITTEL
ZUR REGENERATION

1